# EUROPEAN PATENT APPLICATION

(11) **EP 2 687 954 A2**
(43) Date of publication of application: **22.01.2014**
(21) Application number: 13176839.2
(22) Date of filing: 17.07.2013
(51) Int. Cl.: G06F 3/0354, G06F 3/041, G06F 3/0488

(54) **Method of executing functions of a terminal including pen recognition panel and terminal supporting the method**

(30) Priority: 17.07.2012 KR 20120078003
(71) Applicant: Samsung Electronics Co., Ltd, Gyeonggi-do 443-742 (KR)
(72) Inventor: Kim, Taeyeon, 443-742 Gyeonggi-do (KR); Park, Hyunmi, 443-742 Gyeonggi-do (KR); Oh, Saegee, 443-742 Gyeonggi-do (KR); Lee, Jaemyoung, 443-742 Gyeonggi-do (KR); Lee, Joohoon, 443-742 Gyeonggi-do (KR); Jeon, Jinyoung, 443-742 Gyeonggi-do (KR)
(74) Representative: Birchenough, Lewis

(57) **Abstract**

Disclosed are a method of executing a function of a terminal and a terminal supporting the method. The method includes identifying a position of a touch pen on the pen recognition panel; and defining a non-effective area and an effective-area for a touch input event of a touch panel aligned with the pen recognition panel based on the position of the touch pen.

## Description

### BACKGROUND

### Field of the Invention

The present disclosure relates generally to an execution of a function of a terminal including a pen recognition panel and, more particularly, using a pen and a finger to provide a more stable and accurate execution of the terminal.

### Description of the Related Art

Terminals are widely used based on their mobility and supports various user functions, for example, a file reproduction function, a file search function, a file editing function and the like as well as a mobile communication function.

However, a size of the terminal is limited to support easy portability. As a result, the small sized display unit has a difficulty in performing various user inputs. To overcome this, a prior art provides an input means such as a stylus pen, so that a user can perform a more refined touch operation. Meanwhile, when the user holding a pen performs an input action on the touch screen, a part of the hand such as a palm typically contacts the touch screen before the pen which in turn causes an error in the input action. Accordingly, in order to ignore the touch input by the palm, a conventional terminal considers a method of treating a contact area size equal to or larger than a predetermined area as non-responsive. However, this method still generates a lot of errors as it is difficult to accurately distinguish an intended hand contact, which is frequently treated as non-responsive in the conventional art.

### SUMMARY

Accordingly, the present invention has been made in view of the above problems and provides additional advantage, by providing a terminal and its method of executing a function in a terminal having a pen recognition panel while distinguishing a hand touch possible area more accurately using the pen recognition panel.

Also, the present invention supports an easier execution of a variety of functions by distinguishing between a pen touch area via a touch pen and a hand touch area via a fingertip or hand.

In accordance with an aspect of the present invention, a terminal includes a pen recognition panel for generating a pen input event according to an operation of a touch pen; a touch panel disposed over the pen recognition panel; and a controller for identifying the position of the touch pen on the pen recognition panel and defining a non-effective area and an effective-area of the touch panel according to the position of the touch pen.

In accordance with another aspect of the present invention, a method of executing a function of a terminal including a pen recognition panel includes identifying a position of a touch pen on the pen recognition panel; and defining a non-effective area and an effective-area for a touch input event of a touch panel aligned with the pen recognition panel based on the position of the touch pen.

In accordance with another aspect of the present invention, a method of executing a function of a terminal including a pen recognition panel includes when a touch input event is detected from a predetermined area of a touch panel while a touch pen remains within a recognizable range from the pen recognition panel, performing a function corresponding to a pen input event generated by the touch pen and the touch input event detected by the touch panel; and
when the touch input event is detected from the touch panel in a state where the touch pen leaves the recognizable range from the pen recognition panel, performing a function responsive to the touch input event detected by the touch panel and not being responsive to the pen input event.

According to the teachings of the present invention, a more stable and accurate collection of input events can be generated by an input action by providing means to more accurately distinguish contacts made between the pen input and the hand or finger input.

### BRIEF DESCRIPTION OF THE DRAWINGS

The above features and advantages of the present invention will be more apparent from the following detailed description in conjunction with the accompanying drawings, in which:
FIG. 1 illustrates a configuration of a terminal function executing system according to an embodiment of the present invention;
FIG. 2 illustrates a configuration of a display unit included in the configuration of the terminal shown in FIG. 1;
FIG. 3 is a diagram describing a distinction between a non-effective area and an effective area of a touch panel according to the present invention;
FIG. 4 illustrates a detailed configuration of the terminal included in a configuration of the pen function executing system according to the present invention;
FIG. 5 illustrates a configuration of a controller included in the configuration of the terminal shown in FIG. 4;
FIG. 6 is a diagram describing a terminal function executing method according to the present invention;
FIG. 7 is a diagram describing a definition of a touch panel non-effective area in accordance with a pen-grasp direction of a touch pen according to an embodiment of the present invention.
FIG. 8 is a diagram describing a change in a non-effective area according to a movement of a touch pen;
FIG. 9 is a diagram describing a type of pen input event according to state information by a touch pen according to the present invention;
FIG. 10 is a diagram describing a type of touch input event generated in a touch panel according to the present invention;
FIGs. 11, 12, 13and 14 are diagrams describing a function command mapping according to a combination of a pen input event and a touch input event according to the present invention;
FIG. 15 is a diagram describing error generation processing during a terminal function/application execution according to an embodiment of the present invention;
FIG. 16 is a diagram describing a drawing function application according to use of a touch pen and a finger;
FIG. 17 is a diagram describing an example of function application setting items applied by a pen input event and a touch input event according to an embodiment of the present invention;
FIGs. 18 and 19 are diagrams describing displays of a pen input indicator and a touch input indicator according to an embodiment of the present invention;
FIG. 20 is a diagram describing a first application example of a pen input event and a touch input event according to an embodiment of the present invention;
FIG. 21 is a diagram describing a second application example of a pen input event and a touch input event according to an embodiment of the present invention; and
FIGs. 22 and 23 are diagrams describing a third application example of a pen input event and a touch input event according to an embodiment of the present invention.

### DETAILED DESCRIPTION

Hereinafter, exemplary embodiments of the present invention are described in detail with reference to the accompanying drawings. For the purposes of clarity and simplicity, detailed descriptions of technologies which are known in the art or are not directly related to the present invention may be omitted. Also, detailed descriptions of components having substantially the same configuration and function may be omitted. Further, it is to be noted that some components shown in the accompanying drawings are exaggerated, omitted or schematically illustrated, thus the size of each component does not exactly reflect its real size. However, it should be noted that the present invention is not limited by the relative size or interval shown in the accompanying drawings.

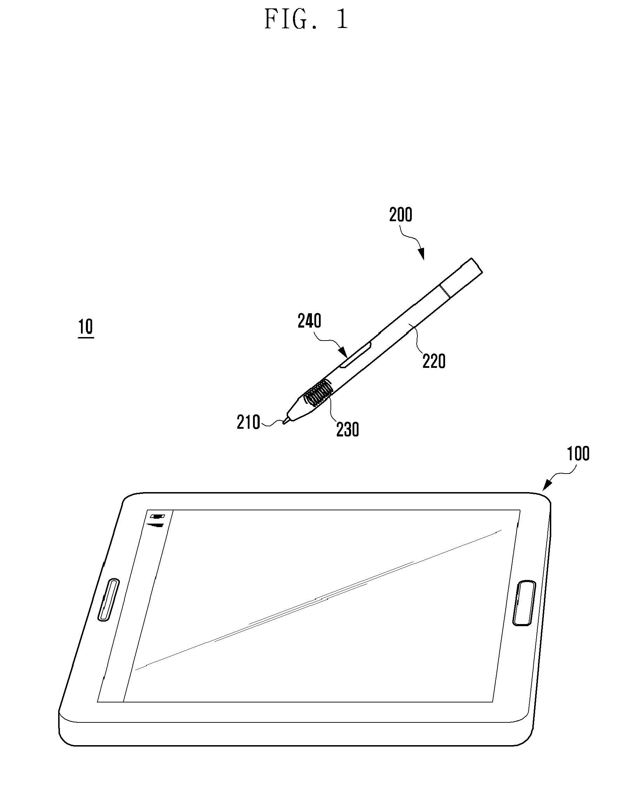

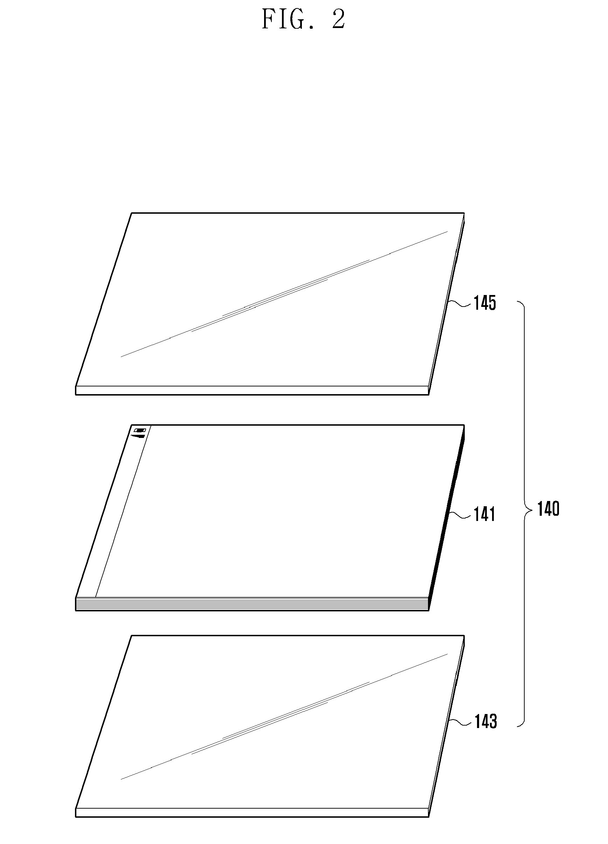

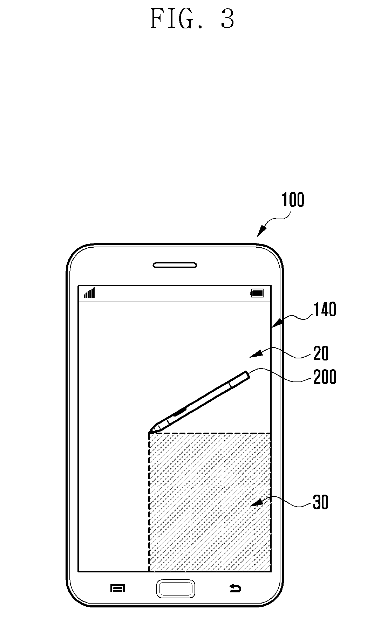

FIG. 1 illustrates a configuration of f a terminal having a pen recognition panel according to an embodiment of the present invention, and FIG. 2 illustrates a configuration of a display unit of a terminal 100 shown in FIG. 1. Further, FIG. 3 is a diagram describing an input area division scheme of the terminal 100 according to the present invention.

Referring to FIGs. 1 to 3, a function executing system 10 according to the present invention includes the terminal 100 and a touch pen 200. A touch panel 145 provides means to detect a contact made by a finger/hand or a touch pen 200 thereon or near thereon. The touch panel 145 has a configuration of recognizing a touch in put in a different way from the pen recognition pen 143, and may be one of various types such as a capacitive type, a resistive type, and a raiser or ultrasonic wave type. The pen recognition panel 143 is a panel which recognizes a pen in a different way from the touch panel 145. For example, the pen recognition panel 143 can detect a position according to electromagnetic induction, thus it can detect a position of the touch pen 200.

The terminal 100 includes the display panel 141 for outputting a screen according to a particular function or application execution mode, a touch panel 145 for detecting an input, and a pen recognition panel 143 for operating according to the touch pen 200. Further, the terminal 100 further includes a driving module and a power unit for driving the touch panel 145, the display panel 141, and the pen recognition panel 143, and a receiving unit for receiving various components included in the terminal 100. The terminal 100 defines the effective area 20 and non-effective area 30 of the touch panel 145 according to a pen input event collected by the pen recognition panel 143. Further, even though a touch event is generated in an area of the touch panel 145 defined as the non-effective area 30, the terminal 100 can perform a control to ignore the corresponding touch event. In addition, the terminal 100 collects one or more touch events from the area of the touch panel 145 defined as the effective area 20, and performs a control to execute functions according to the corresponding touch events. A detailed configuration and a function/application execution of the terminal 100 will be described with reference to the drawings described below.

As illustrated in FIG. 1, the touch pen 200 includes a pen holder 220, a nib 210 located at a tip of the pen holder 220, a coil 230 disposed within the pen holder 220 in an area adjacent to the nib 210, and a button 240 which can change an electromagnetic induction value generated by the coil 230 or generate a particular radio signal. The touch pen 200 according to the present invention having the aforementioned configuration supports electromagnetic induction on the pen recognition panel 143. The terminal 100 detects a position of a magnetic field formed by the coil 230 in a predetermined position of the pen recognition panel 143 and recognizes a touch position.

Here, when the touch panel 141 is provided or the touch panel 145 is disposed on the display panel 141, the nib 210 contacts the touch panel 145 to indicate a particular position of the display unit 140. Since the nib 210 is disposed at the tip of the pen holder 220 and the coil 230 is spaced apart from the nib 210 by a predetermined distance, such that when an input action such as a writing action is performed using the touch pen 200, a distance between a contact position of the nib 210 and a position where the magnetic field by the coil 230 is formed can be compensated, so that a writing or drawing action, an item selection or arrangement action or the like can be determined on the display panel 141.

That is, when the touch pen 200 approaches the pen recognition panel 143 of the terminal 100 within a predetermined distance, the touch pen 200 can generate the magnetic field in a predetermined position of the pen recognition panel 143. Then, the terminal 100 performs a scan operation of the magnetic field generated in the pen recognition panel 143 in real times or periodically. As a result, an input signal is generated from, the terminal 100 to activate the pen recognition panel 143 when the magnetic field is detected during scan operation, or when a particular function for operating the touch pen 200 is activated. Alternatively, the terminal 100 can set up so that the pen recognition panel 143 is activated by default automatically.

Meanwhile, as the touch pen 200 approaches the pen recognition panel 143, the pen recognition panel 143 recognizes different arrangement states of the corresponding touch pen 200 based on a change in the magnetic field detected thereon. That is, when the touch pen 200 is located within a first distance from the display panel 141 or the pen recognition panel 143, the pen recognition panel 143 recognizes that the touch pen 100 is in a contact state. Further, when the touch pen 200 is located within a range equal to or longer than the first distance and equal to or shorter than a second distance, the pen recognition panel 143 recognizes that the touch pen 200 is in a hovering state. Additionally, when the touch pen 200 is located within a recognizable range in a range equal to or longer than the second distance from the pen recognition panel 143, the pen recognition panel 143 recognizes that the touch pen 200 is in an air state. As described above, the pen recognition panel 143 of the terminal 100 can collect distinguished signals according to the separation amount or distance from the touch pen 200.

The button 240 arranged on the touch pen 200 can be pressed by the user. As the button 240 is pressed, a particular signal value is generated in the touch pen 200 and then transmitted to the pen recognition panel 143. To this end, a particular device which can change a particular capacitor, an additional coil, or electrostatic induction may be disposed on an area adjacent to the button 240. Further, the button 240 is designed to recognize a push action generated based a change in an electromagnetic induction value induced in the pen recognition panel 143 caused by a connection between the device next to the button and the coil 230 according to a touch or a push. Alternatively, the button 240 is designated to generate a radio signal corresponding to a push action and then transmit the generated radio signal to a receiver arranged in a separate area of the terminal 100. Hence, the terminal 100 can recognize the push action of the button 240 according to the received radio signal.

As described above, the terminal 100 can collect information according to an arrangement state of the touch pen 200 with relation to the pen recognition panel 142 and the push state of the button 240 of the touch pen 200. That is, the terminal 100 can collect information on whether the touch pen 200 is in the contact state where the touch pen 200 contacts the display unit 140 or in the hovering state, and information on whether the button 240 of the touch pen 200 is pressed or unpressed during these two states. Further, the terminal 100 generates a function command to perform a particular function according to pen state information provided by the touch pen 200 and a touch input event transmitted from the touch panel 145. In alternate embodiment, the terminal 100 can support a particular function based on the pen state information, the touch input event, and motion recognition information of the touch pen 200.

Briefly, when the function/application execution system 10 according to the present disclosure having the above configuration performs a particular input action on the display unit 140 of the terminal 100 using the touch pen 200, an effective area 20 and a non-effective area 30 of the touch panel 145 are defined according to the position of the touch pen 200. Accordingly, the function/application execution system 10 according to the present disclosure supports generation of various input signals by the pen recognition panel 143 responsive to the touch pen 200 as well as touch inputs detected by the touch panel 145. Using a dual recognition by respective panels 143 and 145, the function executing system 10 can support an easier and quicker utilization of the terminal function by finding a corresponding function from a function table 153, which stores various pen input events detected on the particular pen recognition panel 143 and touch input events recognized on the touch panel 145 that are mapped into particular terminal functions.

As described above, the function executing system 10 according to the present disclosure defines the effective area 20 of the touch panel 145 according to the position of the touch pen 200 and the pen recognition panel 143 and collects touch input events based on the touch panel 145 to support an integrative and more convenient executions of various functions, as explained in details hereinafter.

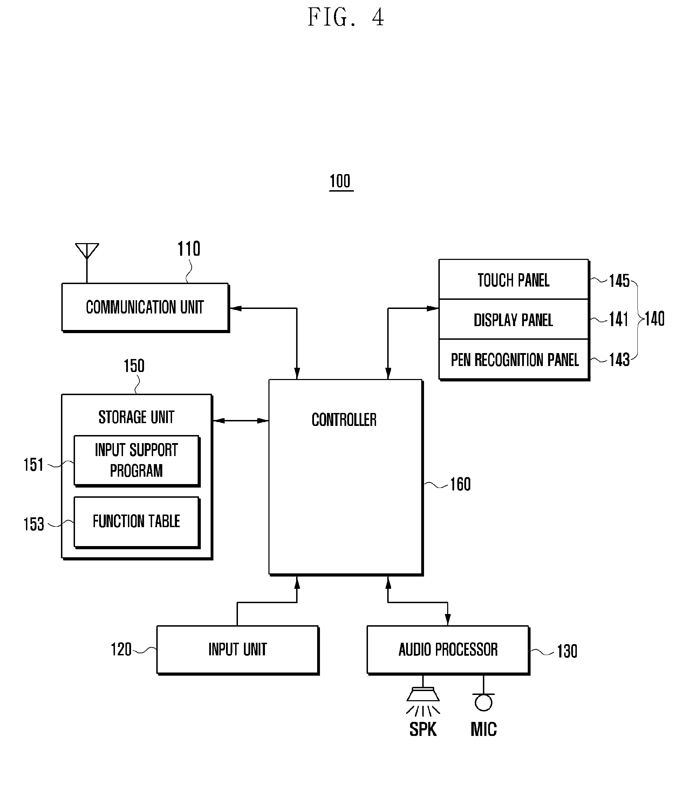

FIG. 4 is a diagram illustrating a configuration of the terminal 100 for supporting a pen function/application execution according to an embodiment of the present disclosure in more detail.

Referring to FIG. 4, the terminal 100 according to the present disclosure include a communication unit 110, an input unit 120, an audio processor 130, a display unit 140, a storage unit 150, and a controller 160. Here, the display unit 140 includes the display panel 141, the pen recognition panel 143, and the touch panel 145.

The terminal 100 according to the present disclosure having the aforementioned configuration can detect a position of the touch pen 200 based on the pen recognition panel 143 and determine ranges of the effective area 20 and non-effective area 30 of the touch panel 145 based on the detected position of the touch pen 200. Further, the terminal 100 collects at least one of a pen input event including pen state information of the touch pen 200 and motion recognition information corresponding to a motion input action, and a touch input event generated in the effective area 20 of the touch panel 145. When the events are collected, the terminal 100 identifies a predefined particular function command which matches at least one of the collected pen input event and the touch input event, and supports a specific terminal function according to the corresponding function command.

Accordingly, the pen recognition panel 143 is located in a predetermined position of the terminal 100 to be in an activated state according to a particular event generation or by default. The pen recognition panel 143 may have a predetermined area on a lower part of the display panel 141, for example, an area to cover a display area of the display panel 141. Further, the pen recognition panel 143 receives pen state information according to an approach of the touch pen 200 which in turn causes a change in the magnetic field detected thereon and an activation of the button 240 of the touch pen 200 and transmits the received pen state information to the controller 160. In addition, the pen recognition panel 143 receives motion recognition information according to a motion action of the touch pen 200 and transmits the received motion recognition information to the controller 160.

As described above, the pen recognition panel 143 has a configuration of receiving a position value of the touch pen 200 according to electromagnetic induction by the touch pen 200 having the coil 230. The pen recognition panel 143 collects electromagnetic induction values depending on an approach interval of the touch pen 200 and transmits the collected electromagnetic values to the controller 160. At this time, the transmitted electromagnetic induction value may correspond to the pen state information, that is, information indicating whether the touch pen 200 is in the hovering state in which the touch pen 200 is spaced apart from the pen recognition panel 143, the display panel 141, or the touch panel 145 by a predetermined interval or in the contact state in which the touch pen 200 contact the display panel 141 or the touch panel 145 within a predetermined interval.

Meanwhile, the pen state information collected by the terminal may vary depending on a type of the button 240 arranged at the touch pen 200. That is, as described earlier, when the button 240 is implemented to change the electromagnetic induction value formed by the coil 230, the pen state information indicating whether the button 240 is input can be received by the pen recognition panel 143 and then transmitted to the controller 160. For example, a structure that can change the electromagnetic induction value may be a capacitor, a separate coil or the like selectively connected to the button 240, or a specific device in various types which can change the electromagnetic induction value on the pen recognition panel 143. Meanwhile, when the button 240 corresponds to a structure for separate radio signal transmission, the terminal 100 may further include a reception device which can receive a radio signal according to an input of the button 240, so that the controller 160 can determine whether the input of the button 240 is made based on the radio signal received by the corresponding reception device.

The touch panel 145 may be disposed on an upper part or a lower part of the display panel 141, and can transmit information on a touch position and a touch state according to a change in capacitance or a change in resistance or voltage, which is caused by a touch object, to the controller 160. The touch panel 145 may be arranged in at least a part of areas of the display panel 141 or entire areas of the display panel 141. Particularly, the touch panel 145 according to the present disclosure can be activated during an activation state of the pen recognition panel 143. Then, the touch panel 145 can be divided into the effective area 20 and the non-effective area 30. The touch input event generated in the touch panel 145 can be transmitted to the controller 160, and the controller 160 can determine whether to apply the corresponding touch input event based on position information of the effective area 20 and the non-effective area 30, and generation position information of the touch input event.

The display panel 141 has a configuration of outputting various screens related to the operation of the terminal 100. For example, the display panel 141 can provide various screens such as an initial standby screen or a menu screen for supporting a function/application execution function/application execution of the terminal 100, and a file search screen, a file reproduction screen, a broadcasting reception screen, a file editing screen, a web page access screen, a memo writing screen, an electronic book reading screen, a chatting screen, an e-mail or message writing screen, and an e-mail or message reception screen according to a function selection based on a corresponding function activation. When each function of the display panel 141 is activated, the pen recognition panel 143 can be activated according to an advance setting.

Meanwhile, the motion recognition information sensed through the pen recognition panel 143 can be output to the display panel 141 in a corresponding form. For example, when the motion recognition information is a motion corresponding to a particular pattern, an image corresponding to the corresponding pattern can be output to the display panel 141. Further, when the touch pen 200 is located in a predetermined position of the display unit 140, an indication point corresponding to a position of the touch pen 200 and an indication point corresponding to a touch position where the touched object touches the touch panel 145 can be output to the display panel 141. Alternatively, when the touch pen 200 is located in a predetermined position of the display unit 140 according to a function design, information on an indication form related to the touch pen 200 can be output to the display panel 141. Further, the display panel 141 supports the user in using the touch panel 151 while recognizing the range of the non-effective area 30 by distinguishably displaying the non-effective area 30 and the effective area 20. The screens output to the display panel 141 will be described later in more detail with reference to diagrams illustrating screen examples.

The storage unit 150 has a configuration of storing various programs and data required for operating the terminal 100. For example, the storage unit 150 can store an operating system required for operating the terminal 100 and function programs for supporting the screens output to the display panel 141. Particularly, the storage unit 150 can store an input support program 151 for supporting a pen function/application execution function/application execution according to the present disclosure and a function table 153 for supporting the input support program 151.

The input support program 151 includes various routines for supporting an input function/application execution function/application execution of the terminal 100. For example, the input support program 151 includes a routine which supports an activation of the touch panel 145, a routine which identifies an activation condition of the pen recognition panel 143, a routine which collects position information of the touch pen 200 by operating the pen recognition panel 143, and a routine which defines the effective area 20 and the non-effective area 30 of the touch panel 145 based on the collected position information of the touch pen 200. Further, the input support program 151 includes a routine which collects at least one of a pen input event input from the pen recognition panel 143 and a touch input event input from the touch panel 145, a routine which identifies a function corresponding to the collected input event, and a routine which performs the corresponding function.

The function table 153 has a configuration of including particular functions performed in accordance with generation of at least one of the pen input event and the touch input event, or in any combination thereof. The function table 153 includes function lists to be performed based on pen state information of the touch pen 200 and motion recognition information of the touch pen 200 when the pen input event is generated. Further, the function table 153 includes function lists to be performed according to the corresponding touch event when the touch input event is generated. Particularly, the function table 153 includes function lists to be performed in accordance with simultaneous generation of the pen input event and the touch input event.

Meanwhile, the communication unit 110 is a component required when the terminal 100 supports a communication function. Particularly, when the terminal 100 supports a mobile communication function, the communication unit 110 may be implemented by a mobile communication module. The communication unit 110 can perform terminal functions requiring the communication function, for example, a web access function, a chatting function, a message transmission/reception function, and a phone call function. Particularly, when the pen input event is collected from the touch pen 200 and the touch input event is collected from the touch panel 145 while the communication unit 110 is driven, the terminal 100 can support performance of functions related to the communication unit 110 according to the collected input events.

The communication unit 110 receives update information on the function table 153 according to the present disclosure from an outside while supporting the communication function of the terminal 100 and transmits the received update information to the controller 160

The update information on the function table 153 includes information corresponding to the pen input event and the touch input event for supporting a newly installed terminal function. Further, the update information on the function table 153 includes pen input event and touch input event mapping information for correcting errors of predefined information or supporting a new function.

The input unit 120 may be implemented by a side key or a separately provided touch pad. Further, the input unit 120 includes a button key for turning on or turning off the terminal 100 and a home key for supporting a return to a basic screen supported by the terminal 100. The input unit 120 can generate an input signal for a particular function activation based on the pen recognition panel 143 and the touch pen 200, and an input signal for terminating the activated particular function. The input unit 120 may generate an input signal for terminating the pen recognition panel 143 and the touch panel 145 according to a user's control.

The audio processor 130 has a configuration of supporting at least one of functions of outputting an audio signal and collecting an audio signal. Accordingly, the audio processor 130 includes a speaker (SPK) and a microphone (MIC). The audio processor 130 can output an audio sound required during a process of supporting the terminal function/application execution according to the present disclosure. For example, when a position of the touch pen 200 is detected from the pen recognition panel 143, the audio processor 130 can output a specific effect sound or guide sound corresponding to the detected position. Further, when the touch input event is collected from the effective area 20 of the touch panel 145, the audio processor 130 can output a specific effect sound or guide sound according to generation of the corresponding touch input event or according to application of the touch input event. Further, when the touch input event is generated from the non-effective area 30 of the touch panel 145, the audio processor 130 can output a specific effect sound or guide sound for informing that the position is the non-effective area 30. Additionally, the audio processor 130 can control generation of a vibration together with or separately from the guide sound or effect sound.

The controller 160 includes various components for supporting the terminal function/application execution according to an embodiment of the present disclosure, and may control signal processing and data processing for the function/application execution of the terminal.

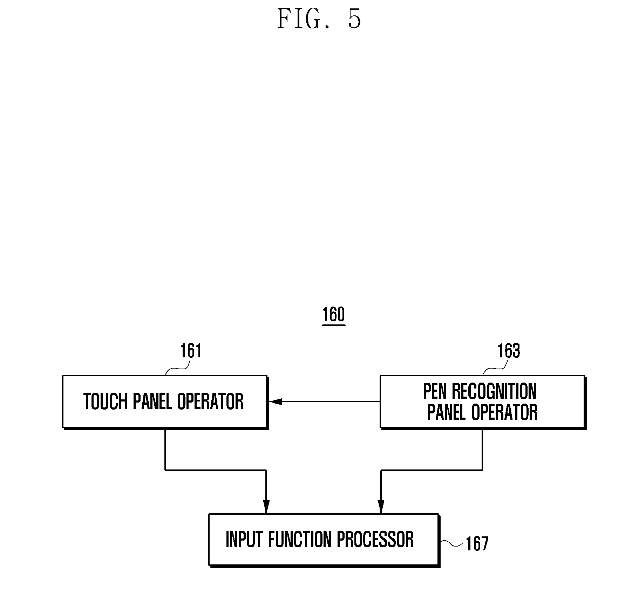

FIG. 5 is a diagram illustrating the configuration of the controller 160 according to the present disclosure in more detail.

Referring to FIG. 5, the controller 160 according to the present disclosure includes a touch panel operator 161, a pen recognition panel operator 163, and an input function processor 165.

The touch panel operator 161 activates the touch panel 145 according to particular function activation, collects touch input events generated in the touch panel 145, and transmits the collected touch input events to the input function processor 165. Particularly, when the touch panel operator 161 receives position information of the touch pen 200 from the pen recognition panel operator 163, the touch panel operator 161 divides the touch panel 145 into the effective area 20 and the non-effective area 30 based on the received position information while activating the touch panel 145. Further, when the touch panel operator 161 receives the touch input event from the touch panel 145, the touch panel operator 161 identifies a generation position of the corresponding touch input event and controls to ignore the touch input event generated in the non-effective area 30. The touch panel operator 161 can transmit the touch input event generated in the effective area 20 to the input function processor 165.

When a preset particular function is activated or a user request is generated, the pen recognition panel operator 163 can perform a control such that the pen recognition panel 143 is activated. Further, the pen recognition panel operator 163 collects the pen input event including at least one of pen state information of the touch pen 200 with respect to the pen recognition panel 143 and a state of the button 240 of the touch pen 200, and motion recognition information caused by a motion of the touch pen 200. Here, the pen recognition panel operator 163 detects a change in an input electromagnetic induction value to collect pen state information, by scanning the pen recognition panel 143, identifying whether the touch pen 200 is in the hovering state, the contact state, a button pressed state, or a button unpressed state. The collected pen state information can be provided to a command generator 167. Then, the collected pen input events can be transmitted to the input function processor 165. Further, the position information of the touch pen 200 included in the pen input event is transmitted to the touch panel operator 161.

The input function processor 165 can support at least one of the touch input event transmitted from the touch panel operator 161 and the pen input event transmitted from the pen recognition panel operator 163. Accordingly, the input function processor 165 can generate function commands corresponding to the touch input event and the pen input event with reference to the function table 153 stored in the storage unit 150 and perform functions corresponding to the generated function commands are performed. The operation process by the input function processor 165 will be described in more detail with reference to the drawings described below.

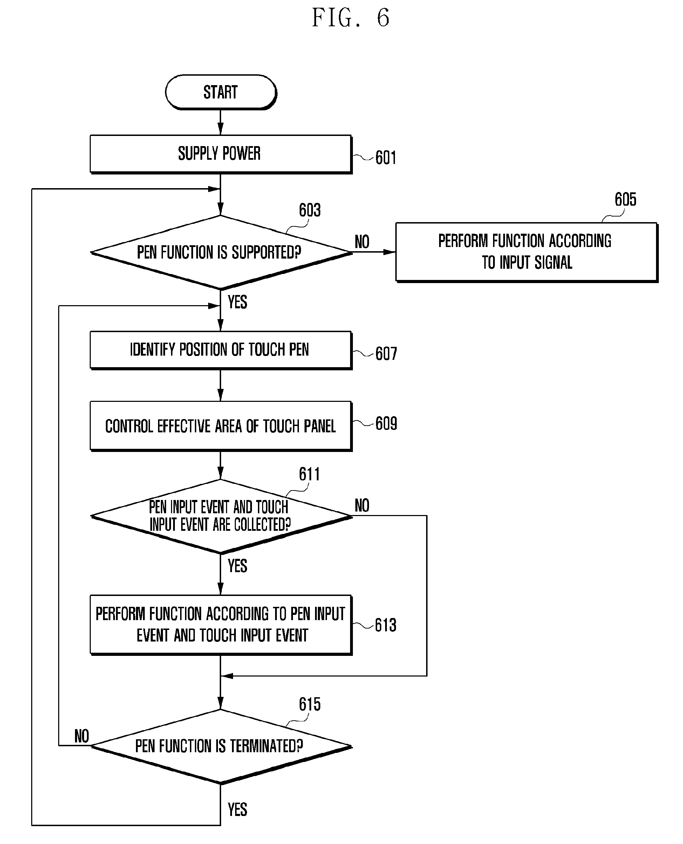

FIG. 6 is a flowchart describing a method of executing functions of a terminal according to an embodiment of the present disclosure.

Referring to FIG. 6, when power is supplied from a power unit as shown in step 601 to power the terminal 100, the controller 160 identifies whether an input signal according to preset schedule information (or from the input unit 120 or the touch panel 145 having an input function), is for supporting a pen function as shown in step 603. When the generated input signal is an input signal irrelevant to the pen function support, the process proceeds to step 605 to support other function/application execution. For example, the controller 160 can change a state of the terminal 100 into a sleep state or terminate the terminal 100 according to an input signal. Alternatively, the controller 160 can reproduce a file or support a search function for a particular file according to an input signal.

Meanwhile, when the input signal responsive to the pen function is generated in step 603, the controller 160 proceeds to step 607 and identifies a position of the touch pen 200. Here, the controller 160 can perform a control such that the pen recognition panel 143 is activated. Then, the controller 160 can identify whether electromagnetic induction by the touch pen 200 is generated by scanning the pen recognition panel 143 periodically or in real time. When the position information of the touch pen 200 is collected, the controller 160 proceeds to step 609 and uses the corresponding position information to control the effective area of the touch panel 145.

Next, the controller 160 can identify whether there is a collection of the pen input event and the touch input event in step 611. If so, in step 611, the controller 160 proceeds to step 613 and controls performance of functions according to the pen input event and the touch input event. Here, the controller 160 can perform a control such that a predefined particular function corresponding to the pen input event and the touch input event is performed with reference to the function table 153. Meanwhile, when there is no generation of the pen input event and the touch input event, step 613 may be skipped.

Next, the controller 160 identifies whether there is generation of an input signal for terminating the pen function in step 615. If not, in step 615, the controller 160 returns to the step 607 and re-performs the succeeding steps. When the input signal for terminating the pen function is generated in step 615, the controller returns to the step prior to step 603 and supports re-performance of the succeeding steps.

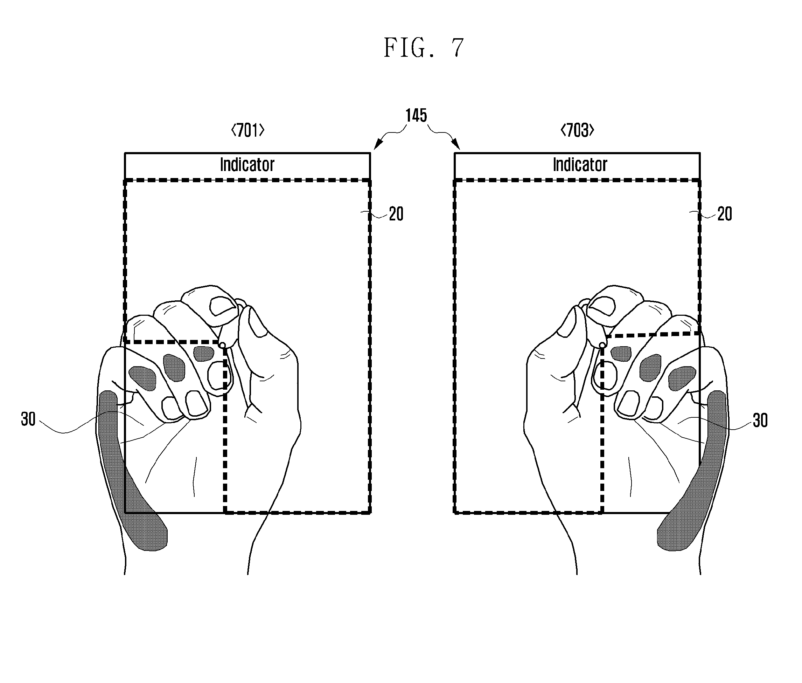

FIG. 7 is a diagram describing distinction between the effective area 20 and the non-effective area 30 of the touch panel 145.

Referring to FIG. 7, the terminal 100 can support different settings of directions of the effective area 20 and the non-effective area according to a grip state of the user when the effective area 20 and the non-effective area 30 of the touch panel 145 are set. That is, when the user is a right handed person as shown in a screen 701, the terminal 100 can provide a support such that the non-effective area 30 has a predetermined range in a lower left part of a front surface of the screen. Particularly, the terminal 100 can set a predetermined area defined by two lines drawn straight toward a left edge and a lower edge of the display panel 141 from a position of the touch pen 200, as the non-effective area 30. When the non-effective area 30 is set, the effective area 20 of the touch panel 145 in turn is automatically defined.

Meanwhile, when the user is a left handed person as illustrated in a screen 703, the terminal 100 places the non-effect area 30 in a lower right part of the front surface of the screen. The non-effective area 30 can be set as a predetermined area defined by two lines drawn straight toward a right edge and the lower edge from a position where the touch pen 200 is located. The non-effective area 30 for the left handed person can be actually an area symmetrical to the non-effective area for the right handed person.

The terminal 100 can provide an item such as a menu for setting a right handed mode and a left handed mode. Then, the user can determine whether to use the right handed mode or the left handed mode for the touch pen 200 through the menu. When the right handed mode or the left handed mode is set, the terminal 100 can automatically define the non-effective area of the touch panel 145 according to the set corresponding mode when the position information of the touch pen 200 is detected. Meanwhile, when a right handed or left handed mode is not set or is not supported, the terminal 100 activates the touch panel 145 and automatically sets the non-effective area 30 based on information on an area where a palm touch area having greater a predetermined amount is detected, and the position information of the touch pen 200 depending on the location of palm touch area.

Meanwhile, although the non-effective area of the touch panel 145 has been described to have a rectangular shape, the present disclosure is not limited thereto. That is, the non-effective area is based on the position information of the touch pen 200, but may be an area having a predetermined size made by a curved line instead of an area made by the straight line toward the edge. Thus, the non-effect area 30 according to the present disclosure can be a predetermined area spread in a lower left part or lower right part from the position of the touch pen since the non-effect area 30 is set to ignore a touch by a hand gripping the touch pen 200.

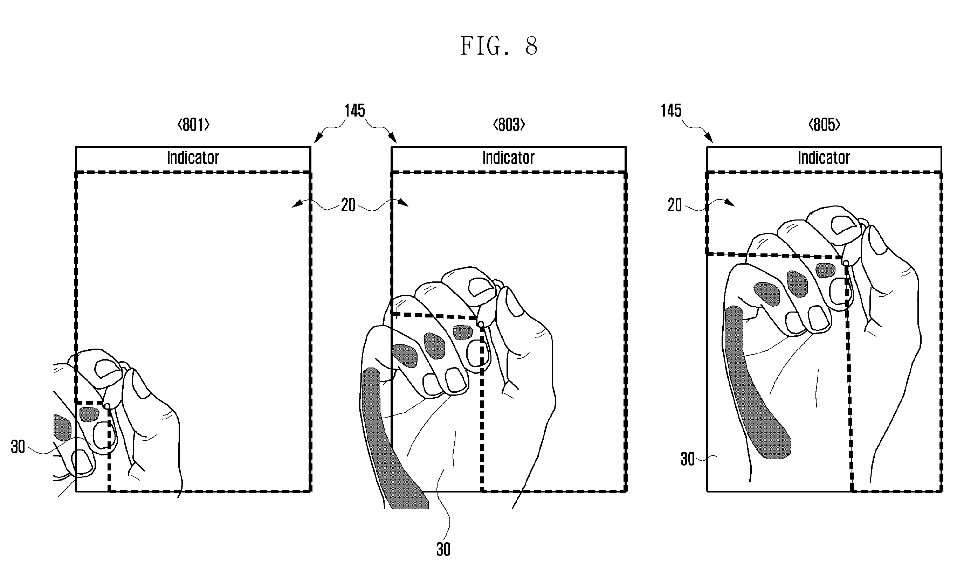

FIG. 8 is a diagram describing a control of the non-effective area 30 of the touch panel 145 according to an embodiment of the present disclosure.

Referring to FIG. 8, in a state where the touch pen 200 is used based on the right handed mode, the terminal 100 can identify position information of the touch pen 200 in real time or periodically. Particularly, when the touch pen 200 is located in a first position in the lower left part as illustrated in a screen 801, the terminal 100 can define the non-effective area 30 of the touch panel 145 based on the first position of the touch pen 200as well as the effective area 20 of the touch panel 145. Accordingly, the user can generate the touch input event on the effective area 20 by using his/her hand or fingertip.

Meanwhile, when the position of the touch pen 200 is located in a center of a screen 803, that is, when the touch pen 200 moves to a second position of the display unit 140, the terminal 100 newly or redefines the non-effective area 30 of the touch panel 145 based on the second position. Further, when the position of the touch pen 200 moves to a third position of the display unit 140 as illustrated in a screen 805, the terminal 100 defines again the non-effective area 30 of the touch panel 145 based on the third position. As a result, the user can perform an input action for generation the touch input event on the effective area 20 defined by the touch pen 200, and the terminal 100 can perform a control such that the touch input event generated on the non-effective area 30 is ignored. As a result, the terminal 100 can invalidate a variation of a contact part generated by actually bringing the hand into contact with the touch panel 145 according to a movement of the user's hand as in the prior art while holding the touch pen 200 based on the non-effective area 30, without any separate operation process. Accordingly, the terminal 100 according to the present disclosure can process the touch input event through a more simple operation by identifying only a required area to detect the touch input. That is, when the touch input event is generated, the terminal 100 can process the touch input event only by identifying whether the touch input event is generated on the effective area 20 or the non-effective area 30. Accordingly, the terminal 100 can provide quicker operation while removing an error of the palm touch generated by the hand touching the touch screen while holding the touch pen 200 as in the prior art.

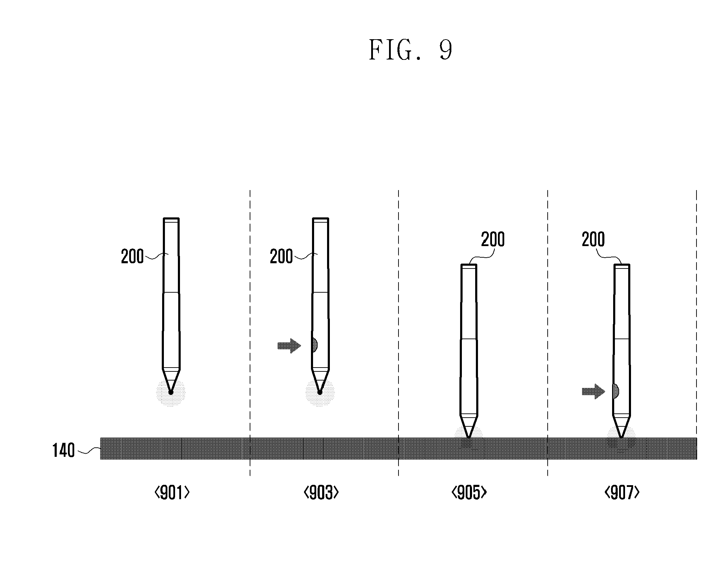

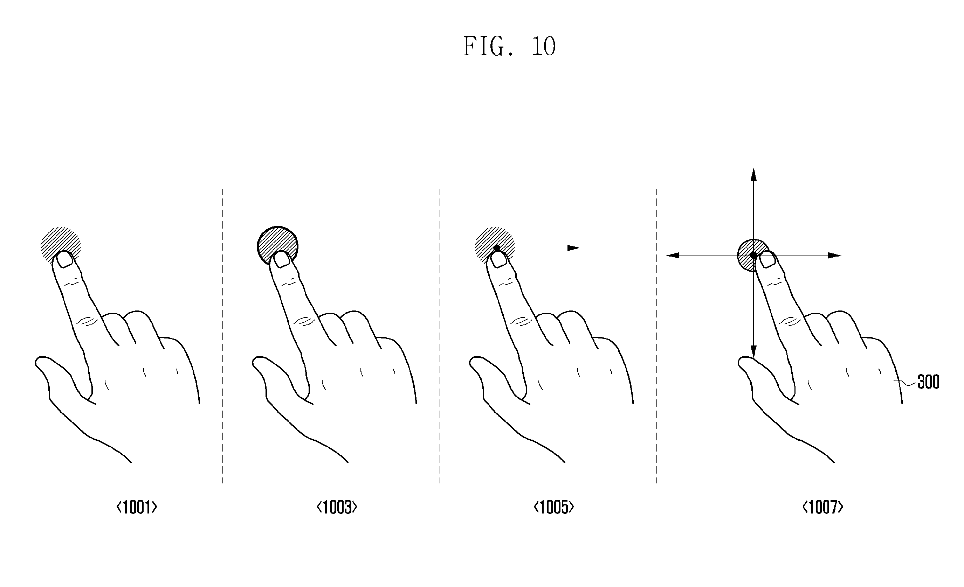

FIGs. 9 and 10 are diagrams describing various input events generated by the touch pen 200 and a hand 300 according to an embodiment of the present disclosure.

Referring to FIG. 9 based on the gap between the touch pen 200 and the recognition panel 143 of the display unit 140, the terminal 100 can detect a pen hover state if the touch pen 200 is spaced apart from the pen recognition panel 143 by a predetermined interval as illustrated in a screen 901. At this time, the terminal 100 can also detect whether the button 240 of the touch pen 200 is activated or not. Further, the terminal 100 can collect the pen touch input event indicating that the touch pen 200 is near or in contact with the pen recognition panel 143, as illustrated in a state 903 as well as whether the button 240 is activated on the touch pen 200, as illustrated in a state 907.

Meanwhile, referring to FIG. 10, a fingertip or hand 300 of the user can perform an input action for generating the touch input event according to a contact state with the display unit 140. Accordingly, the terminal 100 can collect a finger tap touch input event indicating that a part of the hand 300 of the user, as illustrated in a state 1001, and a finger tap and hold touch input event indicting that a contact state remains for a predetermined time after the finger of the hand 300 contacts the touch panel 145 as illustrated in a state 1003. Further, the terminal can collect a finger tap and move touch input event indicating that the finger of the hand 300 moves in a predetermined direction in a state of touching a particular position of the touch panel 145 as illustrated in a state 1005, and a finger flick touch input event indicating that the finger of the hand 300 touches a particular position of the touch panel 145 and moves in a predetermined direction at a particular speed, and when the touch is released. Here, the touch input events collected by the terminal 100 may be signals generated in parts defined as the effective area 20 of the touch panel 145.

Meanwhile, after defining the non-effective area 30 and the effective area 20 of the touch panel 145 according to position recognition of the touch pen 200, the terminal 100 can provide a visual indication of the non-effective area 30. That is, the terminal 100 can distinguishably display the non-effective area 30 and the effective area 20 of the touch panel 145 according to the operation of the touch pen 200 on the display unit 140. Then, the user will be able to perform the touch input action while recognizing the non-effective area 30 in generating the touch input event using the hand 300.

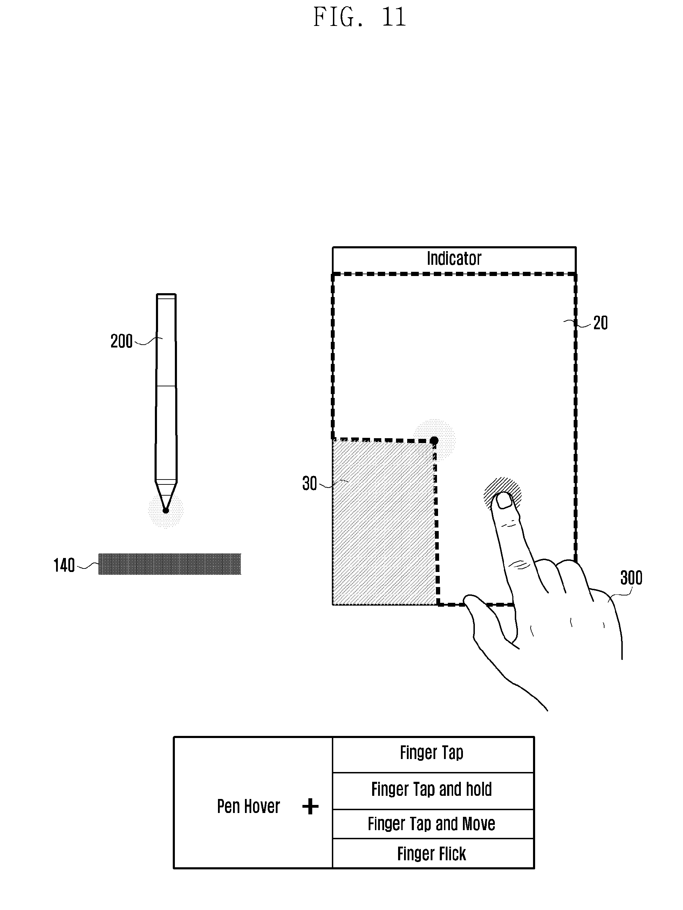

FIGs. 11 to 14 are diagrams describing a combination of the pen input event and the touch input event described above.

As illustrated in FIGs. 11 to 14, the terminal 100 according to the present disclosure can combine touch input events, which can be generated by the hand or finger 300, with respect to the pen hover state, the pen hover with button pressed state, the pen touch state, and the pen touch with button pressed state collected by the touch pen 200 and the pen recognition panel 143. Such a function can be supported by simultaneously activating the pen recognition panel 143 and the touch panel 145. Particularly, by integratively operating the pen input event together with the touch input event only on the effective area 20 among touch input events generated by the hand 300, it is possible to support input event operation with less error as in the prior art.

As illustrated in FIG. 11, the terminal 100 can support executions of pen hover state information and a combination of the finger tap, finger tap and hold, finger tap and move, and finger flick touch input events generated in the effective area 20 of the touch panel 145.

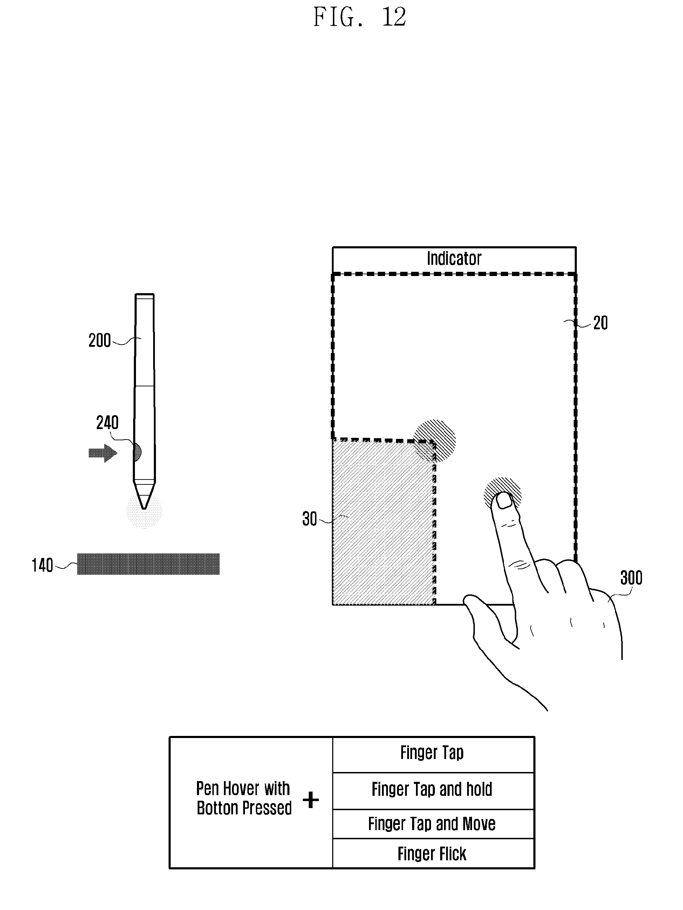

As illustrated in FIG. 12, the terminal 100 can support executions of the pen hover with button pressed state information and the combination of the finger tap, finger tap and hold, finger tap and move, and finger flick touch input events generated in the effective area 20 of the touch panel 145.

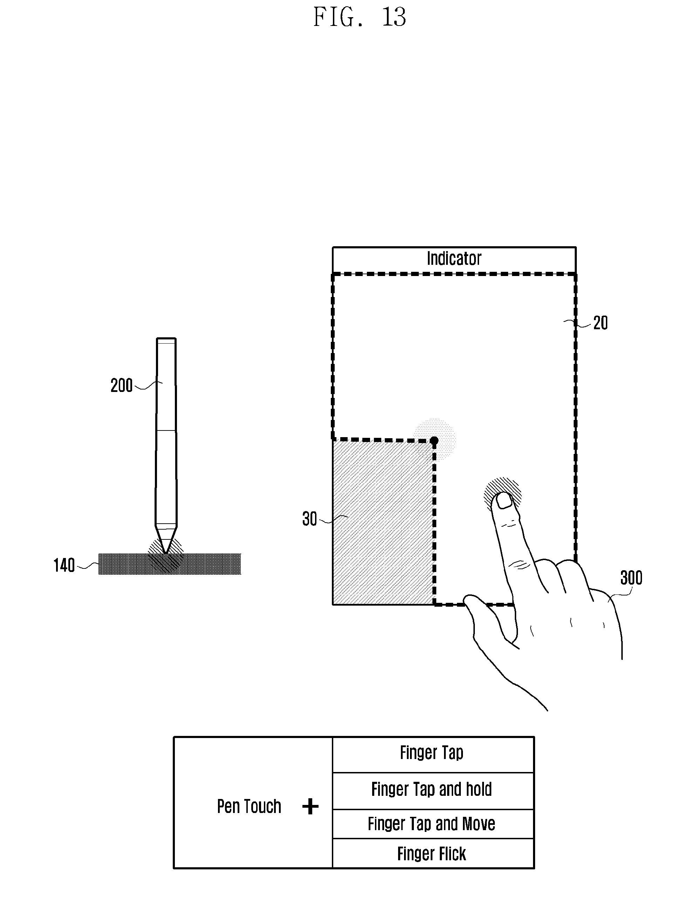

As illustrated in FIG. 13, the terminal 100 can support executions of pen touch state information generated by the touch pen 200 and the pen recognition panel 143 and the combination of the finger tap, finger tap and hold, finger tap and move, and finger flick touch input events generated in the effective area 20 of the touch panel 145.

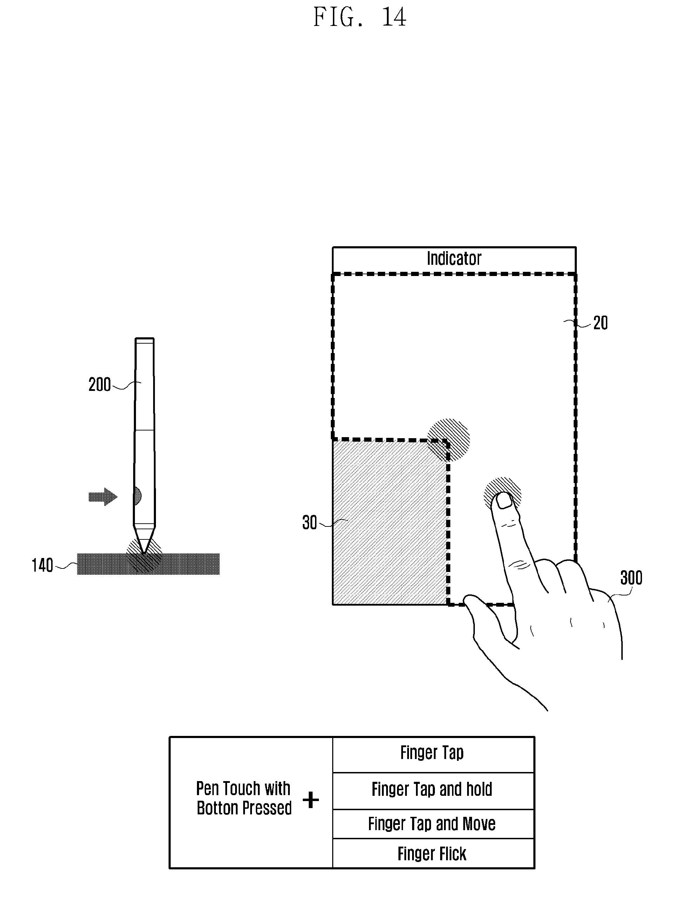

As illustrated in FIG. 14, the terminal 100 can support executions of pen touch with button pressed state information generated by the touch pen 200 and the pen recognition panel 143 and the combination of finger tap, finger tap and hold, finger tap and move, and finger flick touch input events generated in the effective area 20 of the touch panel 145.

For illustrative purposes, FIGs. 11-14 only show a finger tap applied on the effective area 20, but it should be noted that other input events or any combination thereof can be performed on the effective area 20.

The function table 153 stored in the storage unit 150 of the terminal 100 may include function commands mapped to perform particular terminal functions corresponding various combinations of the pen input event and the touch input event.

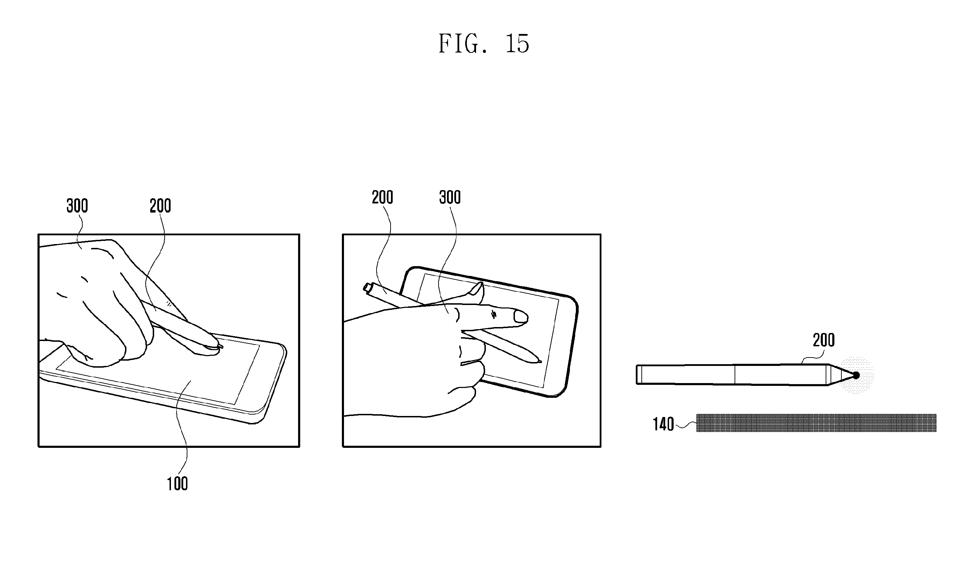

FIG. 15 is a diagram describing input event processing for a particular condition during a terminal function/application execution according to an embodiment of the present disclosure.

Referring to FIG. 15, a user typically holds the touch pen 200 between a thumb and an index finger and between a middle finger and a ring finger, or between a thumb and an index finger and between a ring finger and a pinky finger. Here, the user can also activate or contact the touch screen using any of the fingers. That is, the user can hold the touch pen 200, as shown, in order to use the finger. At this time, the contact made by the user's hand 300 can generate a touch input event on the touch panel 145. Meanwhile, the touch pen 200 can be recognized as the pen hover state by the pen recognition panel 143 even through no action for a separate input is desired. Hence, in a state as illustrated in FIG. 15, the touch input event can be generated on the non-effective area 30. To overcome this, when a movement speed of motion recognition information generated by a motion of the touch pen 200 is the same as a movement speed of the touch input event by the hand 300, the terminal 100 can perform a control such that the pen input event generated by the touch pen 200 is ignored. Accordingly, the user can stably generate the touch input event in the touch panel 145 of the terminal 100 using the hand or finger only when the user is holding the touch pen 200 during non-usage state, as shown in FIG. 15.

Meanwhile, the terminal 100 identifies a position of the touch pen 200 in the pen hover state regardless that the touch pen 200 is gripped for the storage and supports the definition of the non-effective area 30 of the touch panel 145. When the length of the touch pen 200 has a value equal to or longer than a predetermined length to be gripped, it is highly likely that the coil 230 which is located near the nib 210 to perform actual electromagnetic induction is located in a position which does not influence fingers of the hand of the user. That is, as described above, when the right handed user grips the touch pen 200 between a thumb and an index finger and between a ring finger and a little finger, the coil 230 of the touch pen 200 may be disposed near the little finger. As a result, even though the non-effective area 30 of the touch panel 145 is defined according to a position of the touch pen 200, it may be less likely to influence the touch input action by the hand gripping the touch pen. Accordingly, when the touch pen 200 is gripped by the hand 300, the terminal 100 provides, through a particular mode, a function of allowing the pen input event of the touch pen 200 according to the same speed movement to be ignored, and thus the particular mode is used based on a user's selection as necessary.

A particular user may place the coil 230 of the touch pen 200 between a thumb and an index finger. In this case, the setting of the non-effective area 30 by the touch pen 200 may influence the touch input action by the hand gripping the touch pen 200. The terminal can support prevention of the error condition by allowing the user to set a pen input event error compensation mode of the touch pen 200.

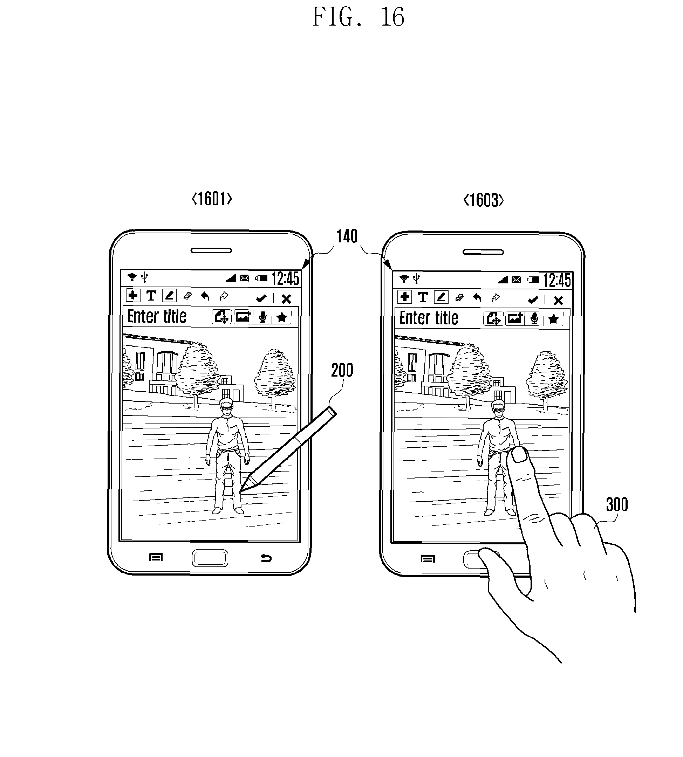

FIG. 16 is a diagram describing an alternate operation of the pen recognition panel 143 and the touch panel 145 according to another embodiment of the present disclosure.

Referring to FIG. 16, as illustrated in a screen 1601, the touch pen 200 can operate on the display unit 140 according to a control of the user to support a drawing function. When the touch pen 200 moves on the display unit 140, the pen recognition panel 143 included in the display unit 140 collects motion recognition information according to a motion of the touch pen 200 and transmits the collected motion recognition information to the controller 160. The controller 160 can perform a function corresponding to the transmitted motion recognition information. For example, the controller 160 can provide a support such that a line having a set color and a set thickness is drawn on the display unit 140 along a trace of the touch pen 200. During the drawing mode, the controller 160 can adaptively ignore the touch input event generated in the non-effective area 30 of the touch panel 145 as explained earlier with reference to FIGs. 7 and 8. Further, when the touch pen 200 is moved, the effective area 30 changes. However, the terminal 100 according to the present disclosure can continues to ignore any touch input event occurring in the non-effective area 30.

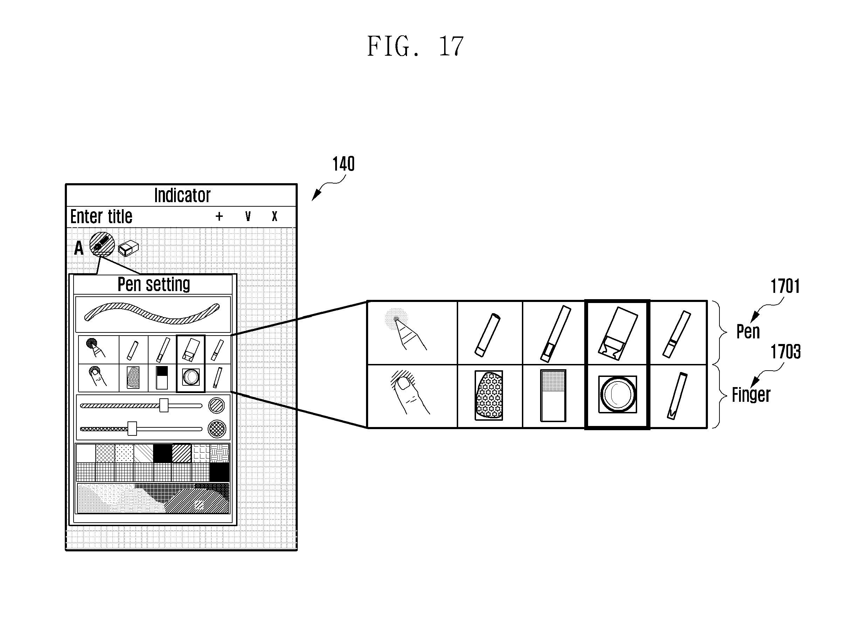

Thereafter, as illustrated in a screen 1603, when the touch pen 200 is removed from the display unit 140 and the hand 300 contacts the display panel 140, the touch panel 140 can transmit the touch input event generated by the hand 300 to the controller 160. Then, the controller 160 can perform a function according to the touch input event. For example, the controller 160 can control the display unit 140 so such that a line having a set color and a set thickness is drawn and displayed on the display unit 140 along a trace pattern generated by the hand 300. Here, the application function by the hand 300 applied by the controller 160 may be different from the application function performed by the touch pen 200. That is, the controller 160 can provide a support such that the line drawn by the touch pen 200 and the line drawn by the hand 300 have different colors and different thicknesses from each other according to the setting, as illustrated in FIG. 17. As shown in FIG. 17, when the touch input is generated using the touch pen 200, an effect of painting a color using the pastel can be selected. Also, when the touch input event is generated in the touch panel 145 using the hand 300, a spread effect of the pastel inputted by the pen input event of the touch pen 200can be applied.

In addition, the functions of the pen input event and the touch input event distinguishes between the touch pen 200 and fingers of the hand 300 and also distinguishes a palm and each finger to input different effects. During the process, the distinction of the palm or each finger can be performed through an area detected on the touch panel 145. Accordingly, the user can draw a picture as that performed when an actual picture is drawn, by using the touch pen 200 and a finger of the hand 300. Meanwhile, the terminal 100 provides a support such that the touch input event which can change a pastel tone line using the hand 300 which does not grip the touch pen 200 is generated immediately or simultaneously with the pen input event while generating the pen input event by the touch pen 200 to input the line according to the pastel function. Accordingly, the terminal 100 according to the present invention supports an immediate and simple operation of a rubbing function in the drawing function. Meanwhile, the rubbing function may be replaced with an erasing function. That is, the terminal 100 provides a support such that an area drawn using the touch pen 200 is erased using the hand 300 as necessary while performing a particular drawing function by using the touch pen 200. In other words, the terminal may support a drawing function by the touch pen 200 and a erasing or rubbing function by the hand on the display unit simultaneously or individually.

As described above, the terminal 100 according to the present disclosure can change a drawing effect input by the touch pen based on the touch input event. When the touch pen 200 is within a recognizable range of the pen recognition panel 143 and provides the drawing effect, the terminal 100 supports a function of changing the drawing effect according to generation of the touch input event. Further, when the touch pen 200 leaves the recognizable range of the pen recognition panel 143, the terminal 100 can support a function of removing or erasing the drawing effect according to the generation of the touch input event.

FIG. 17 is a diagram describing function settings of the pen input event and the touch input event according to an embodiment of the present disclosure.

Referring to FIG. 17, the terminal 100 can provide items which can set a function to be applied according to generation of the pen input event and a function to be applied according to generation of the touch input event. For example, the terminal 100 can provide a support such that menu items related to a memo function are output to a part for example, an upper part of a screen for supporting the menu function. At this time, when a function application setting item of the menu items related to the menu function is selected, an item for changing a function according to an input event can be provided as illustrated in FIG. 17. The user can generate an input signal for setting an item to be applied according to each input event among the function application setting items. That is, the user can selectively choose each of a function item 1701 to be applied in the generation of the pen input event by the touch pen 200 and a function item 1703 to be applied in the generation of the touch input event by the hand 300. Here, the function item according to the touch input event and the function item according to the pen input event may be various items for supporting the drawing function.

Accordingly, the terminal 100 provides a plurality of setting items according to touch input events by the hand 300 as illustrated in FIG. 17. Further, the terminal 100 provides a menu window for a plurality of item settings to be applied according to pen input events by the touch pen 200 as illustrated in FIG. 17. The menu window for the plurality of item settings may be output when a particular touch input event is collected from the touch panel 145 by the hand 300 in a state where the touch pen 200 is recognized from the pen recognition panel 145 so that the particular pen input event is collected. Particularly, when the particular touch input event and the pen input event generated on the effective area 20 of the touch panel 145 are collected, the menu window for the item settings is output to the display unit 140.

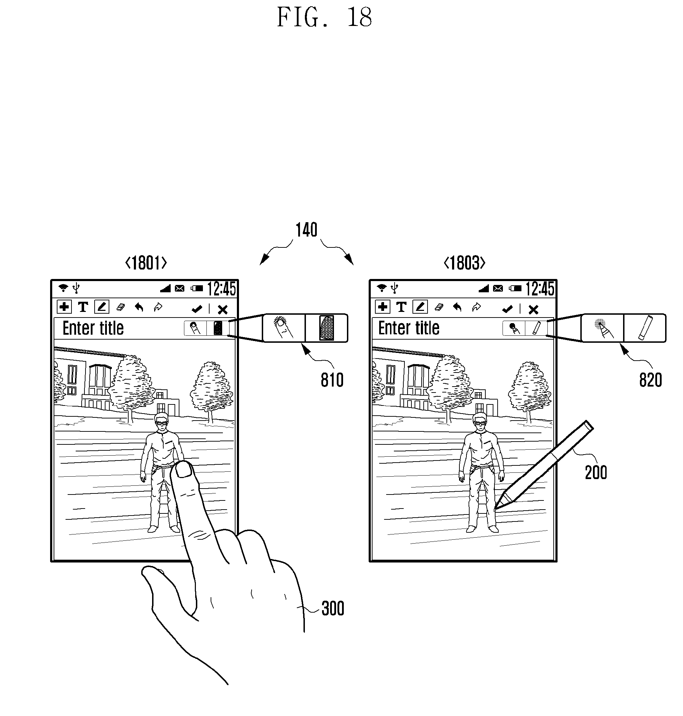

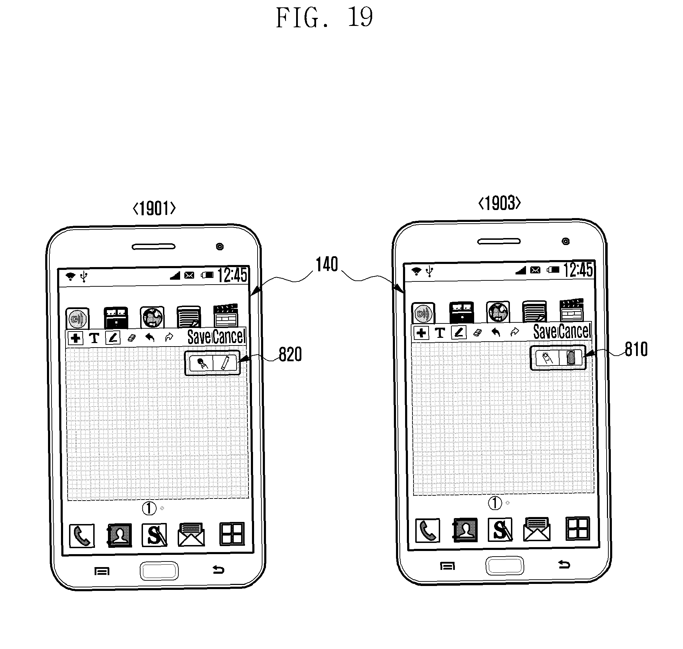

FIGs. 18 and 19 are diagrams describing screens showing a function/application execution state according to an embodiment of the present disclosure.

Referring to FIG. 18 first, the user can select a drawing function provided by the terminal 100. To this end, the terminal 100 can output a screen corresponding to the drawing function to the display unit 140 as illustrated in a screen 1801 according to a user's selection. The terminal 100 performs a control such that the pen recognition panel 143 and the touch panel 145 are simultaneously activated together with an activation of the drawing function. Further, when the touch input event by the hand 300 is transmitted from the touch panel 145 as illustrated in the screen 1801, the terminal 100 can support function application according to the corresponding touch input event. That is, the terminal 100 can support a function of drawing a line having a preset color and thickness according to a motion of the hand 300 on the touch panel 145. Particularly, the terminal 100 can output a touch input indicator 810 for a setting state to be applied by the touch input event generated in a part, for example, an upper right part of the screen of the touch panel 145. The touch input indicator 810 includes an indication area for indicating an operation state of the touch panel 145 and an indication area for indicating a metaphor applied when the touch input event is generated. Here, the terminal 100 can output the touch input indicator 810 to a part of the screen by default. Further, when the user generates an input signal for selecting the touch input indicator 810, a selection window including the function application setting items described in FIG. 17 is output to the display unit 140.

Meanwhile, when the user uses the touch pen 200, the terminal 100 can output the pen input indicator 820 to a part of the screen, for example, a position where the touch input indicator 810 had been output as illustrated in a screen 1803. Here, when the touch pen 200 is located in a predetermined position of the display unit 140 including the pen recognition panel 143, that is, in the pen hover state, the terminal 100 can output the pen input indicator 820. At this time, the terminal 100 can standby without function application by the touch pen 200 and can perform function application according to a motion of the touch pen 200 in the pen touch state where the touch pen 200 contacts the display unit 140. Accordingly, the user can generate the pen input event corresponding to the pen touch by identifying in advance a type of the input performed by the touch pen in the pen hover state. Further, the user can select the pen input indicator 820 when desiring to change a function application setting in the pen hover state. Then, the terminal 100 can output the selection window including the function application setting items to be applied by the pen input event to the display unit 140 as illustrated in FIG. 17. Accordingly, the user can identify in advance a function or effect input by using the touch pen 200 and provide a support such that the setting is changed as necessary. When the touch pen 200 leaves a predetermined range so that the pen recognition panel 143 cannot detect the touch pen 200 or the operation of the touch pen 200 is stopped, the terminal 100 can remove the pen input indicator 820 from the display unit 140 and provide a support such that the touch input indicator 810 is output again.

Meanwhile, although it has been described that at least one of the touch input indicator 810 and the pen input indicator 820 is output to the part of the screen, the present disclosure is not limited thereto. That is, the terminal 100 can simultaneously output the touch input indicator 810 and the pen input indicator 820 to the screen. Particularly, when the touch pen 200 is detected by the pen recognition panel 143, the terminal 100 can output all of the touch input indicator 810 and the pen input indicator 820. Then, the user can generate the touch input event on the effective area 20 except for the non-effective area defined by the position of the touch pen 200 or generate the pen input event by the touch pen 200 on entire areas. As a result, the terminal 100 can provide a support such that the simultaneously generated touch input event and pen input event are together applied to the drawing function. Here, applied functions may be functions indicated by the touch input indicator 810 and the pen recognition indicator 820.

FIG. 19 illustrates an output of the indicator in a memo function. The terminal 100 can output a memo writing screen according to a memo function based on a user's request or preset schedule information as illustrated in a screen 1901. Alternatively, when the touch pen 200 approaches the display unit 140 within a predetermined distance, the terminal 100 can provide a support such that the memo writing screen is output to the display unit 140 by default. Accordingly, the terminal 100 can maintain the pen recognition panel 143 in an activation state. Alternatively, the terminal 100 maintains the pen recognition panel 143 in the activation state in order to support a particular function executed based on the pen recognition panel 143 and provides a support such that when a particular pen input event is generated by the touch pen 200 in such a state, the memo writing screen is output according to generation of the corresponding pen input event. Alternatively, when a particular pen input event and a particular touch input event are generated in the activation state of the pen recognition panel 143, the terminal 100 can provide a support such that the memo writing screen is output to the display unit 140 according to generation of the corresponding input events.

When the memo writing screen is output to the display unit 140, the terminal 100 can output an indicator together as illustrated in FIG. 19. Particularly, since a screen 1901 corresponds to an output of the memo writing screen according to the operation of the touch pen 200, the pen input indicator 820 can be output to a part of the memo writing screen. When the touch pen 200 leaves a recognizable range from the display unit 140 or an input signal for instructing stopping the operation of the touch pen 200 is generated, the terminal 100 can provide a support such that the touch input indicator 810 is output to a part of the screen as illustrated in a screen 1903. Meanwhile, as described with reference to FIG. 18, the memo screen corresponding to the screen 1901 can output the pen input indicator 820 for the touch pen 200 and the touch input indicator 810 for the hand 300 together. The user generates the touch input event in the effective area 20 of the touch panel 145 by using both the touch pen 200 and the hand 300, and generates the pen input event in entire areas of the pen recognition panel 143. Alternatively, the user can generate the touch input event using the hand gripping the touch pen 200 for the purpose of the storage or non-usage. During such a process, the terminal 100 can maintain an output of the pen input indicator 820 according to recognition of the touch pen 200.

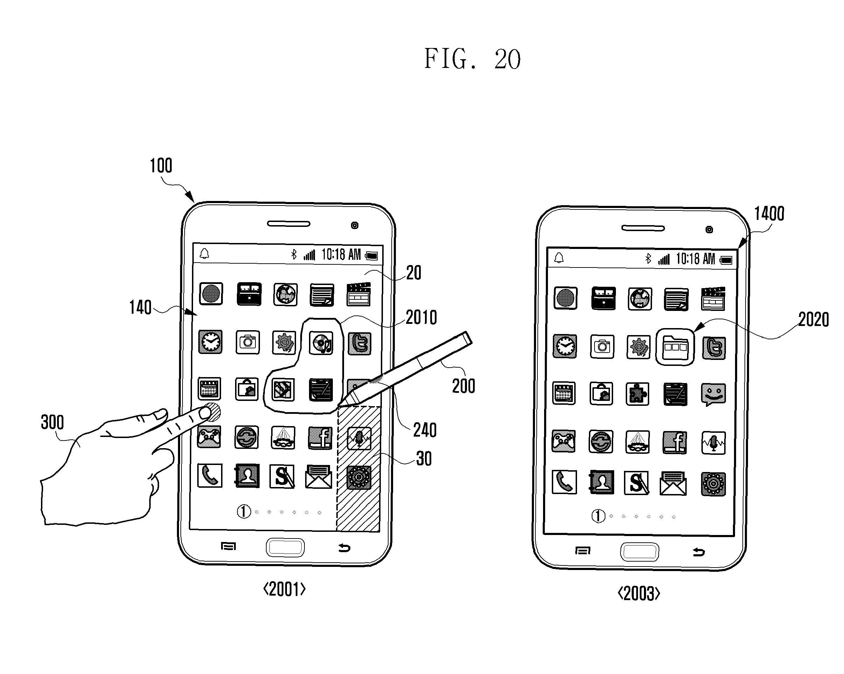

FIG. 20 is a diagram describing a first example of a combination operation of the pen input event and the touch input event according to an embodiment of the present disclosure.

Referring to FIG. 20, the terminal 100 can provide an icon search screen displaying a plurality of icons according to a user's request or preset schedule information as illustrated in a screen 2001. function/application execution. Here, the icons may correspond to different applications or related to a particular terminal function/application execution, and the icon search screen may be the menu screen. Further, when the icon is a thumbnail image icon indicating a number of icon images, the icon search screen may be a gallery screen or a phonebook screen provided in a multi-thumbnail view manner.

In operation, the user can draw a closed curve including a predetermined number of icons using the touch pen 300 in a state where the user touches the icon search screen using a finger 300 and maintains the touch. At this time, the terminal 100 provides a support such that the pen recognition panel 143 and the touch panel 145 are simultaneously activated and collects the touch input event by the hand 300 and the pen input event by the touch pen 200. The pen input events collected by the terminal 100 include state information as the touch pen 200 contacts the display unit 140, a button pushing state information of the button 240, and motion recognition information of the touch pen 200. Here, the terminal 100 can support display effect corresponding to a pen input event by outputting a line along the movement of the touch pen 200 while the touch pen 200 draws a closed curve 2010.

After the touch pen event and the pen input event are generated, as shown in the screen 2001, the terminal 100 performs a preset function according to the detected touch pen event and the pen input event above. That is, the terminal 100 identifies the function table stored in the storage unit 150, identifies a particular function command mapping g the detected touch input event and the pen input event indicated in the corresponding function table 153, and performs the function corresponding to the identified function command. For example, if the detected touch input and pen input events corresponding to a command related to a grouping of items, the terminal 100 changes icons indicated by the closed curve 2010 into a single group and then outputs a group icon 2020 to the display unit 140 as illustrated in a screen 2003. Thus, the terminal 100 can automatically support rearrangements of icons according to icon grouping as well as an indication of the group icon 2020.

Meanwhile, although it has been described that the group icon 2020 is generated by the closed curve 2010 including a plurality of icons, the present disclosure is not limited thereto. That is, under an environment where the touch input event corresponding to the finger tap and hold event is provided to perform a specific function of generating the group icon 2020, the user can perform a control such that a pen touch event for selecting a plurality of icons to be included in one group via the touch pen 200 are repeatedly generated. Further, the icons may correspond to particular contents, thus displaying thumbnail images indicating different contents. Here, the thumbnail images may be a music file, a video file, a picture file and the like.

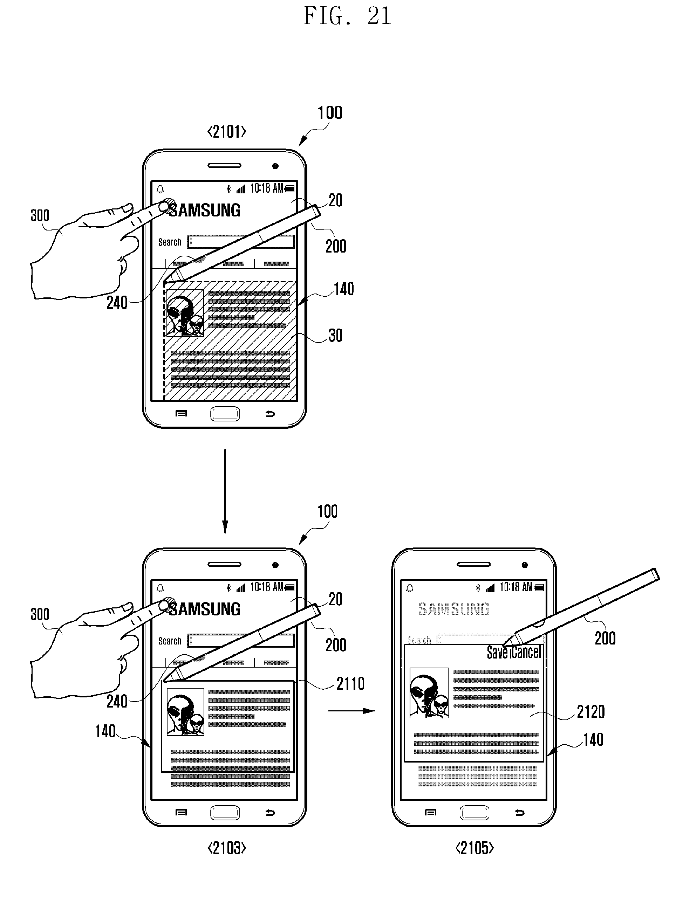

FIG. 21 is a diagram describing a second example of a combination operation of the pen input event and the touch input event according to an embodiment of the present disclosure.

Referring to FIG. 21, the terminal 100 can access a particular server by driving the communication unit 210 according to a user's request or set schedule information and receive a page screen provided by the particular server to output the received page screen to the display unit 140, as illustrated in a screen 2101. Here, the terminal 100 can perform a control such that the pen recognition panel 143 and the touch panel 145 are activated while outputting a page screen to the display unit 140. Accordingly, the user can perform input actions for generating the touch input event and the pen input event on the display unit 140 by using the hand 300 and the touch pen 200, as illustrated in FIG. 21.

Particularly, as the non-effect area 30 of the touch panel 145 is defined by the arrangement of the touch pen 200 on the pen recognition panel 143, the touch input event using another hand or finger 300 can be generated on the effective area 20. Then, the user can draw a closed curve 2110 which designates a predetermined area of the displayed page screen using the touch pen 200, as illustrated in a screen 2103. At this time, the user can perform a control such that the button 240 arranged at the touch pen 200 is pressed or a pressed state is maintained.

After the detecting the activation of the button 240, the terminal 100 can provide a support such that a predetermined area including the closed curve 2110 designated by the touch pen 200 is automatically switched into a memo and then a memo area 2120 is output to the display unit 140, as shown in screen 2105. Alternatively, the user can release the finger tap and hold event to trigger the display of memo function of screen 2105.As explained with reference to FIG. 20, the terminal 100 identifies the function table 153, detects function commands to be executed according to the particular pen input event and touch input function/application execution event.

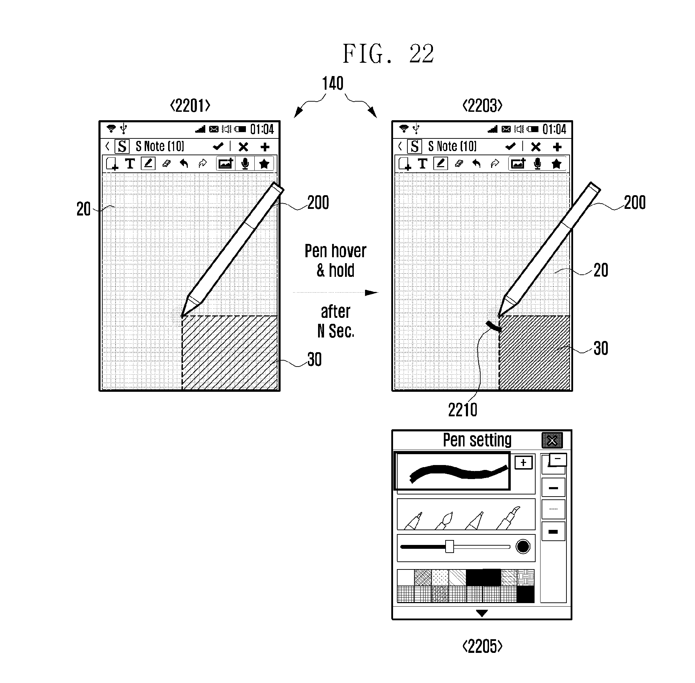

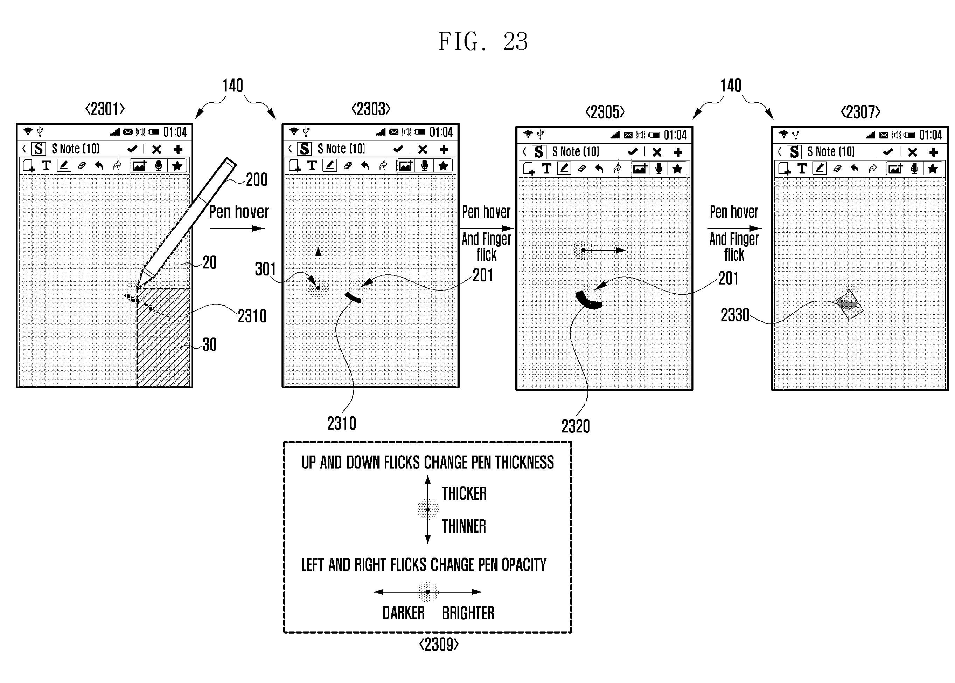

FIGs. 22 and 23 are diagrams describing a third example of a combination operation of the pen input event and the touch input event according to an embodiment of the present disclosure.

Referring to FIG. 22, the terminal 100 activates a note function according to a user's request and outputs a screen corresponding to the activated note function to the display unit 140, as illustrated in a screen 2201. At this time, the terminal 100 can perform a control such that the pen recognition panel 143 and the touch panel 145 are activated according to a note function setting. After activating the note function, the user can hold the touch pen 200 and place the touch pen 200 on the display unit 140. At this time, the user may maintain a state where the touch pen 200 does not contact the display unit 140 for a predetermined time during the pen hover state, and then bring a part of the hand gripping the touch pen 200 into contact with the display unit 140 of the terminal 100, as shown in screen 2203. Meanwhile, when the touch pen 200 is located on the display panel 140 and thus position information is collected, the terminal 100 can define the non-effective area 30 and the effective area 20 of the touch panel 145 based on the collected position information as illustrated in FIG. 22. Accordingly, even though the hand holding the touch pen 200 contacts the display unit 140, the terminal 100 can ignore event generation by the touch on the touch panel 145.

Meanwhile, after the elapse of the predetermined time as illustrated in a screen 2203, the terminal 100 can output a line shape 2210 corresponding to the position of the touch pen 200, for example, an area adjacent to a position where the touch pen 200 is recognized. Here, the line shape 2210 output to the display unit 140 is translucent, so that the user can preferentially detect the line shape 2210 input by the touch pen 200. Further, when the touch pen 200 moves or as the touch pen 200 contacts the display unit 140, the line shape 2210 displayed in a translucent form may disappear. Meanwhile, an indication of the line shape 2210 may be displayed with the size and color by which it will be drawn instead of the translucent form.

Meanwhile, when a predetermined time passes after the line shape 2210 is displayed, the terminal 100 can output a selection window for changing the line shape 2210, as shown in screen 2205 Then, the user can select a shape to be applied to the line by using the touch pen 200. Meanwhile, the selection window may be output to the effective area of the touch panel 145, and accordingly the user can set the desired line shape to be applied to the touch pen 200 using a finger..

Meanwhile, referring to FIG. 23, when the touch pen 200 is in the pen hover state where the touch pen 200 is spaced apart from the display unit 140 by a predetermined distance in a state where an operation function of the touch pen 200 such as the note function is activated, as illustrated in a screen 2301, the terminal 100 can output a first line shape 2310 to an area adjacent to a position where the touch pen 200 is recognized as explained earlier. When the first line shape 2310 is output to the display unit 140, the user can perform a control such that the first line shape 2310 is changed by generating the touch input using the hand 300. Accordingly, the terminal 100 can output a second line shape 2320 of which a thickness is changed from the first line shape 2310 to the display unit 140 or output a third line shape 2330 of which brightness and saturation are changed from the first line shape 2310 to the display unit 140, as illustrated in a screen 2305 to 2307.

The first line shape 2310 provided by the terminal 100 may be changed according to a touch input event direction generated by the hand, as described with reference to the screen 2309.

Meanwhile, although it has been described that the change in the first line shape 2310 is provided by generation of the left, right, up, or down flick event, the present disclosure is not limited thereto. That is, the change in the first line shape 2310 may be defined according to various types and sizes of the touch input events generated on the effective area of the touch panel 145 during the process in which the pen recognition panel 143 recognizes the touch pen 200. For example, a change in the first line shape 2310 may be performed by a finger tap and move, and a size of an applied change may vary depending on a size of a movement distance. Further, the change in the first line shape 2310 may be performed by a finger tap and hold. Items of the change such as a thickness, brightness, saturation, and color are selected according to a position where the finger tap is generated, and a size of the change may vary depending on a duration time of the finger tap and hold.

As described above, the terminal 100 according to the present disclosure can provide a support such that an application form or screen interfaces of the pen input event generated by the touch pen 200 is changed according to different combinations of the touch input event generated on the effective area of the touch panel 145.

Referring back to FIG. 23, the terminal 100 can output the pen recognition position 201 to the display unit 140 in order to make reference to the position indicating the touch pen 200 in the pen hover state. Further, the terminal 100 can output the touch recognition position 301 to the display unit 140 in order to execute the touch input event.

As described above, the terminal function executing method and the terminal supporting the method according to an embodiment of the present disclosure provides a support such that the touch pen 200, the pen recognition panel 143, and the touch panel 145 are simultaneously operated to minimize the errors associated with unintended touch inputs. Accordingly, the present disclosure can support performance of more various functions by mapping function commands for at least one of the pen input event and the touch input event provided from at least one of the activated pen recognition panel 143 and touch panel 145.

Meanwhile, the terminal 100 may further include various additional modules according to a provision form. That is, when the terminal 100 is a communication terminal, the terminal 100 may further include components which have not been mentioned above, which correspond to a near field communication module for near field communication, an interface for transmitting/receiving data through a wired communication method or wireless communication method, an Internet communication module for performing an Internet function by communicating with an Internet network, and a digital broadcasting module for performing a function of receiving and reproducing digital broadcasting. It is difficult to list all of such components since they are variously modified according to a convergence trend of digital devices, but components in the same level as that of the aforementioned components may be further included in the terminal. Further, it is apparent that particular components in the terminal 100 according to the present disclosure are excluded from the components or replaced with other components. It will be easily understood by those skilled in the art.

In addition, the terminal 100 according to an embodiment of the present disclosure may include all information technology devices and multimedia devices such as a Portable Multimedia Player (PMP), a digital broadcasting player, a Personal Digital Assistant (PDA), a music player (for example, an MP3 player), a portable game terminal, a smart phone, a notebook, and a handheld PC and application devices thereof as well as all mobile communication terminals operating based on communication protocols corresponding to various communication systems.

The above-described methods according to the present disclosure can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While exemplary embodiments of the present disclosure have been shown and described in this specification, it will be understood by those skilled in the art that various changes or modifications of the embodiments are possible without departing from the spirit and scope of the disclosure as defined by the appended claims.

## Claims

1. A terminal having a pen recognition panel, comprising:
a pen recognition panel for generating a pen input event according to an operation of a touch pen;
a touch panel disposed over the pen recognition panel and detecting a touch input event; and
a controller for identifying the position of the touch pen over the pen recognition panel and defining a non-effective area and an effective-area of the touch panel according to the identified position of the touch pen.

2. The terminal of claim 1, wherein, when the position of the touch pen is changed according to a movement of the touch pen, the controller newly defines the non-effective area and the effective-area based on the changed position of the touch pen.

3. The terminal of claim 1, wherein the non-effective area includes an area where a hand portion holding the touch pen touches the touch panel, and
wherein the hand portion comprises a right handed person or a left handed person.

4. The terminal of claim 3, wherein the controller defines at least one of the non-effective area for the right handed person and the non-effective area for the left handed person according to the area where the hand portion holding the touch pen contacts the touch panel, or according to a mode setting of a right handed mode and a left handed mode.

5. The terminal of claim 1, further comprising a display panel function/application execution disposed over the pen recognition panel and the touch panel and displaying the non-effective area and the effective-area; or
a display panel function/application execution for displaying at least one of a pen input indicator for indicating a metaphor according to an operation state of the touch pen and application of the touch pen; and a touch input indicator for indicating a metaphor according to an operation state of the touch panel and application of an event generated on the touch panel.

6. The terminal of claim 5, wherein the controller controls the display panel to output the touch input indicator by default, 1 to alternately output the pen input indicator and the touch input indicator, or to output both the pen input indicator and the touch input indicator.

7. The terminal of claim 1, further comprising a storage unit for storing a function table including one or more function commands defining functions of the terminal corresponding to one or more of the pen input event and the touch input event,
wherein the pen input event includes one or more of information on a pen touch state, a pen hover state where the touch pen is spaced apart from the pen recognition panel by a predetermined interval, a motion recognition state, and a button of the touch pen activation state, and
wherein the touch input event includes one or more information on a finger tap state, a finger tap and hold state, a finger tap and move state, and a finger flick state.

8. The terminal of claim 1, wherein the controller provides a support such that a screen interface of the pen input event is selectively changed according to the touch input event generated on the effective area of the touch panel.

9. A method of executing a function of a terminal including a pen recognition panel, the method comprising:
detecting a position of a touch pen on the pen recognition panel; and
defining a non-effective area and an effective-area of a touch panel, which is disposed over the pen recognition panel, based on the detected position of the touch pen.

10. The method of claim 9, further comprising:
changing the position of the touch pen according to a movement of the touch pen; and
newly defining the non-effective area and the effective area based on the changed position of the touch pen.

11. The method of claim 9, wherein the non-effective area includes an area where a hand portion holding the touch pen contacts the touch panel, and
wherein the hand portion comprises a right handed person or a left handed person.

12. The method of claim 11, wherein defining the non-effective area and the effective-area comprises
at least one of the non-effective area for the right handed person and the non-effective area for the left handed person according to the area where the hand portion holding the touch pen contacts the touch panel, or according to a mode setting of a right handed mode and a left handed mode.

13. The method of claim 9, further comprising displaying the non-effective area and the effective-area on a screen, which is disposed over the pen recognition panel and the touch panel; or
displaying at least one of a pen input indicator for indicating a metaphor according to an operation state of the touch pen and application of the touch pen; and a touch input indicator for indicating a metaphor according to an operation state of the touch panel and application of an event generated on the touch panel.

14. The method of claim 13, wherein displaying comprises one or more of:
outputting the touch input indicator by default and alternately outputting the pen input indicator and the touch input indicator according to touch pen recognition; and
outputting the touch input indictor by default and outputting both the touch input indicator and the pen input indicator according to the touch pen recognition.

15. The method of claim 9, further comprising:
storing a function table including one or more function commands defining functions of the terminal corresponding to one or more of the pen input event and the touch input event,
selectively changing a screen interface of the pen input event according to the touch input event generated on the effective area of the touch panel,
wherein the pen input event includes one or more of information on a pen touch state, a pen hover state where the touch pen is spaced apart from the pen recognition panel by a predetermined interval, a motion recognition state, and a button of the touch pen activation state, and
wherein the touch input event includes one or more information on a finger tap state, a finger tap and hold state, a finger tap and move state, and a finger flick state.
